# FASCICULE DE BREVET EUROPEEN

(11) **EP 2 977 321 B1**
(45) Date de publication et mention de la délivrance du brevet: **21.08.2019**
(21) Numéro de dépôt: 15178297.6
(22) Date de dépôt: 24.07.2015
(51) Int. Cl.: B64G 1/00, B64G 1/10, B64G 1/24, B64G 1/26, B64G 1/40

(54) **PROCEDE DE MISE A POSTE D'UN SATELLITE ET DE TEST EN ORBITE DE SA CHARGE UTILE**
VERFAHREN ZUR POSITIONIERUNG EINES SATELLITEN UND ZUM TESTEN SEINER NUZTLAST IN DER UMLAUFBAHN
METHOD FOR STATIONING A SATELLITE AND FOR TESTING THE PAYLOAD THEREOF IN ORBIT

(30) Priorité: 25.07.2014 FR 1401713
(43) Date de publication de la demande: 27.01.2016
(73) Titulaire: THALES, 92400 Courbevoie (FR)
(72) Inventeur: HACHE, Raphaël, 06150 CANNES LA BOCCA (FR); KALTENBACH, Alexandre, 06150 CANNES LA BOCCA (FR); TESSANDORI, Stéphane, 06150 CANNES LA BOCCA (FR)
(74) Mandataire: Priori, Enrico

(56) Documents cités:
- EP-A2- 1 059 232
- WO-A1-2012/040828
- US-A- 5 595 360
- US-A1- 2005 133 671
- US-B1- 6 341 749
- US-B1- 8 457 810

## Description

L'invention porte sur un procédé de mise à poste d'un satellite, incluant une étape de test en orbite de sa charge utile. L'invention s'applique en particulier aux satellites géostationnaires de télécommunications.

Après leur lancement, les satellites de télécommunications doivent être positionnés sur leur orbite opérationnelle - souvent de type géostationnaire - et testés en orbite avant de pouvoir être livrés à l'opérateur de télécommunications qui les a commandés après une revue finale d'acceptation en orbite (IOAR, de l'anglais « In-Orbit Acceptance Review »).

De manière classique, on procède de la manière suivante. Tout d'abord, un lanceur injecte le satellite sur une orbite de transfert très elliptique et inclinée. Le transfert sur orbite géostationnaire (GEO) se fait par propulsion chimique: typiquement trois poussées de 1h chacune, sur 1 semaine. Les manoeuvres de transfert sont généralement effectués de telle sorte que le satellite parvient sur l'orbite GEO à une longitude différente de celle définitive, pour ne pas interférer avec les satellites opérationnels - particulièrement dans le cas où le satellite à tester est destiné à remplacer, sans interruption du service, un satellite devant être décommissionné. Les tests en orbite (IOT, de l'anglais « In-Orbit Testing ») sont effectués dans ces conditions ; ils durent typiquement deux semaines. Puis, on fait dériver le satellite pour le repositionner à sa longitude définitive, ce qui prend encore quelques jours, voire une semaine ou plus. Au total, il faut compter entre trois semaines et plus d'un mois entre le lancement et l'IOAR.

A titre d'exemple, le document WO 2012/040828, qui fait état d'une opération de calibrage de la plateforme avant la phase de transfert, puis d'une activation et vérification de la charge utile après que le satellite ait atteint sa position définitive.

Il existe une tendance à remplacer, en totalité ou en partie, la propulsion chimique des satellites par une propulsion électrique, qui a la particularité de produire une poussée faible (de l'ordre de 1N ou moins) à impulsion spécifique élevée. Voir par exemple les documents US 5,595,360 et US 8,457,810. L'intérêt de cette approche est qu'elle permet une réduction significative de la masse du satellite, et donc du coût du lancement. Toutefois, elle entraine aussi un allongement considérable de la phase du transfert, qui peut attendre entre 3 et 6 mois pour une propulsion entièrement électrique (à comparer avec une semaine environ en cas de propulsion chimique), ce à quoi il faudrait encore ajouter environ un mois pour les IOT et le repositionnement sur orbite GEO.

Le document US 6,341,749 décrit un procédé de mise à poste d'un satellite à propulsion électrique, dans lequel la période de transfert orbital comprend des phases sans propulsion qui sont utilisées pour effectuer des opérations d'acquisition de la Terre et de calibrage de l'attitude, mais pas de la charge utile.

L'invention vise à réduire l'intervalle de temps séparant le lancement de l'IOAR d'un satellite géostationnaire portant une charge utile de télécommunications et utilisant, pour sa mise à poste, une propulsion électrique ou hybride chimique - électrique.

Conformément à l'invention, ce but est atteint en modifiant la phase de transfert du satellite de telle sorte que les IOT puissent être effectués au cours de cette phase, avant que le satellite atteigne l'orbite géostationnaire. La trajectoire de transfert modifiée n'est pas optimale (sa durée est augmentée de quelques jours par rapport à un cas optimal), mais cela permet d'effectuer les IOT « en temps masqué » et d'éviter la phase de repositionnement.

Un objet de l'invention est donc un procédé de mise à poste d'un satellite comprenant une phase de transfert, pendant laquelle ledit satellite se déplace sur une orbite elliptique géosynchrone, ladite orbite étant déformée de manière progressive par propulsion électrique ou hybride électrique-chimique pour la rapprocher d'une orbite géostationnaire, caractérisé en ce que ladite étape de transfert comprend une sous-étape pendant laquelle, au cours d'une pluralité de révolutions du satellite, ladite poussée est arrêtée pendant une fraction de période orbitale et des tests d'une charge utile de télécommunications dudit satellite sont effectués en absence de poussée.

Le procédé peut, en particulier, comprendre les étapes suivantes :
a) à l'aide d'un lanceur, injecter ledit satellite sur une orbite de transfert sub-géosynchrone, elliptique et inclinée par rapport à un plan équatorial ;
b) amener ledit satellite sur ladite orbite elliptique géosynchrone, inclinée par rapport audit plan équatorial ; et
c) par propulsion électrique ou hybride électrique-chimique, appliquer audit satellite une poussée - qu'on peut qualifier de « continue » - adaptée pour rapprocher de manière progressive ladite orbite elliptique géosynchrone inclinée d'une orbite géostationnaire ;
   et ladite étape c) peut comprendre ladite sous-étape
c'), pendant laquelle, au cours d'une pluralité de révolutions du satellite, ladite poussée est arrêtée pendant une fraction de période orbitale et lesdits tests d'une charge utile de télécommunications dudit satellite sont effectués en absence de poussée.

Selon différents modes de réalisation d'un tel procédé :
- Ladite orbite de transfert peut être une orbite de transfert géostationnaire.
- Ladite étape b) peut comprendre l'application d'une poussée adaptée pour augmenter l'altitude de l'apogée et du périgée de l'orbite dudit satellite.
- Ladite orbite géosynchrone peut être elliptique avec son plus grand axe sur ledit plan équatorial et, au cours de ladite sous-étape c', lesdits tests de charge utile peuvent être effectués dans des fractions de période orbitale pendant lesquelles le satellite est le plus éloigné dudit plan équatorial.
- Au cours de ladite étape c), l'on peut appliquer audit satellite une poussée adaptée pour augmenter l'altitude de son périgée et abaisser celle de son apogée.
- Au cours de ladite étape c), l'on peut appliquer audit satellite une poussée adaptée pour diminuer progressivement l'inclinaison de son orbite par rapport audit plan équatorial.
- Au cours de ladite sous-étape c', ledit satellite peut se déplace sur une orbite géosynchrone présentant une inclinaison d'au moins 5°, et de préférence comprise entre 5° et 20°, par rapport audit plan équatorial.
- Le procédé peut comprendre également l'étape suivante :
   d) positionner ledit satellite sur ladite orbite géostationnaire.
- Ledit satellite peut être un satellite de télécommunications à propulsion tout électrique ou à propulsion hybride chimique - électrique.

D'autres caractéristiques, détails et avantages de l'invention ressortiront à la lecture de la description faite en référence aux dessins annexés donnés à titre d'exemple et qui représentent, respectivement :
- La figure 1, certaines orbites de la trajectoire d'un satellite selon un mode de réalisation de l'invention, en vue polaire ;
- La figure 2, les mêmes orbites, vue depuis un plan équatorial ; et
- La figure 3, l'orientation de la poussée d'un satellite pendant une portion d'orbite intermédiaire entre l'apogée et le périgée.

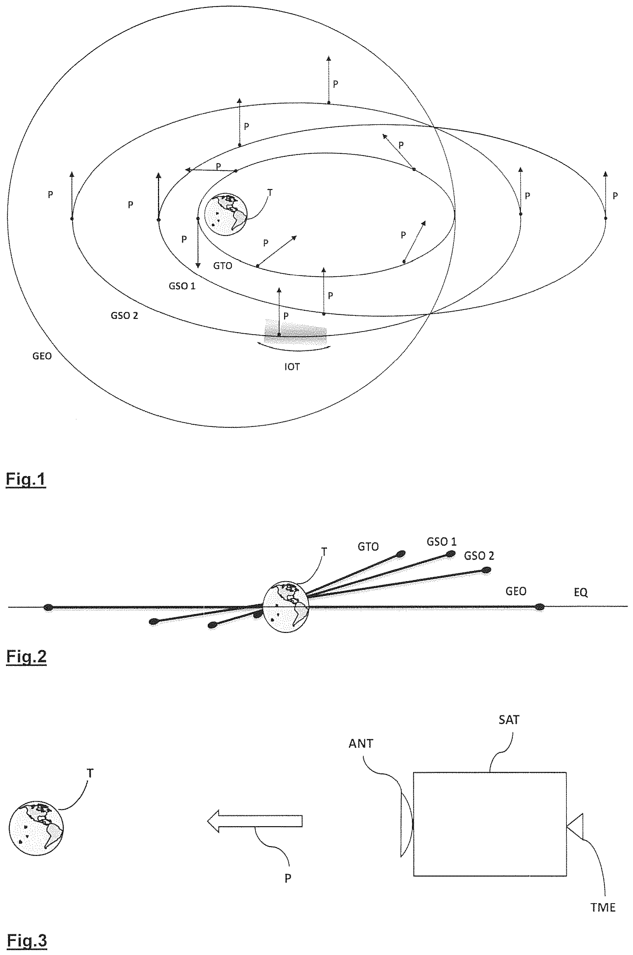

Un lanceur (non représenté) injecte un satellite de télécommunications SAT sur une orbite de transfert OT, très elliptique et de préférence inclinée par rapport au plan équatorial EQ, typiquement avec une inclinaison comprise entre 6° et 30°. Il peut s'agir, par exemple, d'une orbite de transfert géostationnaire (GTO) avec un périgée à une altitude de 290 km, un apogée à une altitude de 36.000 km et une inclinaison de 28°. Sur la figure 1, le satellite SAT parcourt son orbite dans le sens inverse des aiguilles d'une montre.

Un ou plusieurs moteurs électriques, connus en soi, engendrent une poussée continue et de faible intensité, qui déforme l'orbite de manière progressive. Dans la suite, on entendra par poussée « continue » une poussée qui s'exerce sur au moins une, et généralement plusieurs, révolutions du satellite, et à chaque fois sur une fraction significative d'une période orbitale, par exemple 50% ou plus et de préférence 75% ou plus (poussée continue « par intervalles »), par opposition à une poussée impulsionnelle qui s'exerce sur des durées très inférieures à une période orbitale.

Dans une première phase du transfert, la poussée, identifiée par la référence P sur la figure 1, est orientée de manière à augmenter l'altitude du périgée et de l'apogée, et par conséquent la période orbitale. Avantageusement, elle tend également à réduire l'inclinaison de l'orbite. La figure 1 ne montre que la composante de la poussée dans le plan de l'orbite, responsable de l'augmentation d'altitude de l'apogée et du périgée ; la composante hors plan de la poussée, responsable de la réduction d'inclinaison, change de direction à chaque traversée du plan équatorial.

L'intensité de la poussée est typiquement comprise entre 0,25 N et 2 N, et notamment entre 0,5 N et 1 N.

Au bout d'un certain temps, par exemple deux mois, l'orbite devient géosynchrone : sa période est de 24h, mais contrairement au cas d'une orbite géostationnaire elle est elliptique. De préférence, en outre, cette orbite géosynchrone - indiquée par la référence GSO1 sur les figures 1 et 2 - présente une inclinaison non négligeable (5° ou plus, typiquement entre 5° et 20°). De préférence, le plan de cette orbite croise le plan équatorial en correspondance de l'apogée et du périgée ; en d'autres termes, son plus grand axe gît dans le plan équatorial. Dans l'exemple illustré par les figures, la trajectoire GSO1 présente un apogée à 10.000 km et un périgée à 60.000 km d'altitude.

Dans une deuxième phase du transfert, dont la durée peut être également d'environ deux mois, la propulsion électrique agit de façon à baisser l'apogée du satellite et à rehausser son périgée, de façon à rendre l'orbite plus circulaire, tout en maintenant la durée de sa période égale à 24h ; de préférence, en outre, elle réduit l'inclinaison de l'orbite. A la fin du transfert, le satellite se trouve sur orbite géostationnaire, c'est-à-dire géosynchrone, circulaire et d'inclinaison nulle. Sur les figures, la référence GEO indique l'orbite géostationnaire et GSO2 une orbite géosynchrone obtenue à un stade intermédiaire du transfert.

Conformément à l'invention, les IOT sont effectués au cours de ladite deuxième phase de transfert, et plus particulièrement en correspondance d'une portion de l'orbite qui est intermédiaire entre l'apogée et le périgée (sur les figures, la référence « IOT » identifie la portion de l'orbite GSO2 en correspondance de laquelle on effectue les tests). A cet endroit, le satellite est le plus éloigné du plan équatorial, ce qui permet de minimiser les interférences avec les satellites géostationnaires opérationnels. Pour que ces interférences restent à un niveau acceptable, il est préférable que l'inclinaison de l'orbite soit supérieure ou égale à typiquement 5° ; généralement, il n'est pas utile que cette inclinaison dépasse 20°.

Il est facile de se rendre compte qu'au cours de la deuxième phase de transfert, la poussée - ou au moins sa projection sur le plan équatorial EQ - garde une orientation quasi constante dans un référentiel inertiel centré sur la Terre T. Parmi les deux points de l'orbite qui présentent la distance la plus élevée par rapport au plan équatorial, un correspond à une orientation de la poussée qui est approximativement dirigée en direction de la Terre (voir la figure 3). Ce point sera choisi de manière préférentielle pour effectuer les IOT ; en effet, étant donné que les antennes de télécommunications ANT sont généralement disposées à l'opposée des tuyères TME des moteurs électriques, cette configuration minimise les manoeuvres de réorientation du satellite requises pour établir une liaison radio avec le sol.

En général, au cours des IOT il est nécessaire de pouvoir modifier finement l'orientation du satellite, par exemple pour effectuer un balayage permettant de caractériser le diagramme d'émission d'une antenne. Pour cette raison, il est préférable d'arrêter la propulsion au cours des IOT. Cet arrêt peut durer, par exemple, trois heures pour chaque période orbitale de 24h, et a par effet d'augmenter la durée de la deuxième phase de transfert. On peut vérifier, toutefois, que les parties de l'orbite situées à mi-chemin entre l'apogée et le périgée qui, comme expliquées plus haut, sont les mieux adaptées aux IOT, sont aussi celles où la poussée et le moins efficace, et donc où un arrêt temporaire de ladite poussée est le moins pénalisant.

Conformément à l'art antérieur, les IOT comprennent à la fois des périodes de mesure et des périodes de préparation et d'analyse des tests. Les périodes de mesure durent environ 5h par jour, reparties sur deux roulements impliquant deux équipes travaillant en 2 fois huit heures (2x8) ; la durée globale d'une campagne d'IOT est typiquement de deux semaines.

Conformément à l'invention, par contre, les IOT sont effectués sur une période plus longue, mais moins d'heures par jour - par exemple 3h de mesures consécutives par jour pendant un mois. Toutefois, ils se font « en temps masqué », pendant le transfert, ce qui permet au final de réduire le délai de mise en service du satellite. En outre, le fait que les IOT ne se déroulent que quelques heures consécutives par jour, et à des heures fixes, permet de n'impliquer qu'une seule équipe de testeurs au lieu de deux, ce qui réduit les coûts.

L'invention peut s'appliquer aussi bien au cas d'un satellite à propulsion tout électrique qu'à celui d'un satellite à propulsion hybride chimique - électrique.

## Revendications

1. Procédé de mise à poste d'un satellite (SAT) comprenant une étape de transfert, pendant laquelle ledit satellite se déplace sur une orbite elliptique géosynchrone (GSO1, GSO2), ladite orbite étant déformée de manière progressive par application d'une poussée (P) au moyen d'une propulsion électrique ou hybride électrique-chimique pour la rapprocher d'une orbite géostationnaire (GEO), **caractérisé en ce que** ladite étape de transfert comprend une sous-étape pendant laquelle, au cours d'une pluralité de révolutions du satellite, ladite poussée est arrêtée pendant une fraction de période orbitale et des tests sont effectués en absence de poussée, **caractérisé en ce que** lesdits tests sont des tests d'une charge utile de télécommunication.

2. Procédé selon la revendication 1 comprenant les étapes suivantes :
a) à l'aide d'un lanceur, injecter ledit satellite sur une orbite de transfert sub-géosynchrone (GTO), elliptique et inclinée par rapport à un plan équatorial (EQ) ;
b) amener ledit satellite sur ladite orbite elliptique géosynchrone (GSO1), inclinée par rapport audit plan équatorial ; et
c) par propulsion électrique ou hybride électrique-chimique, appliquer audit satellite une poussée (P) adaptée pour rapprocher de manière progressive ladite orbite elliptique géosynchrone inclinée d'une orbite géostationnaire (GEO) ;
dans lequel ladite étape c) comprend une sous-étape
c'), pendant laquelle, au cours d'une pluralité de révolutions du satellite, ladite poussée est arrêtée pendant une fraction de période orbitale et lesdits tests d'une charge utile de télécommunications dudit satellite sont effectués en absence de poussée.

3. Procédé selon la revendication 2 dans lequel ladite orbite de transfert est une orbite de transfert géostationnaire.

4. Procédé selon l'une des revendications 2 ou 3 dans lequel ladite étape b) comprend l'application d'une poussée adaptée pour augmenter l'altitude de l'apogée et du périgée de l'orbite dudit satellite.

5. Procédé selon l'une des revendications 2 à 4 dans lequel ladite orbite géosynchrone est elliptique avec son plus grand axe sur ledit plan équatorial et dans lequel, au cours de ladite sous-étape c', lesdits tests de charge utile sont effectués dans des fractions de période orbitale pendant lesquelles le satellite est le plus éloigné dudit plan équatorial.

6. Procédé selon l'une des revendications 2 à 5 dans lequel, au cours de ladite étape c), l'on applique audit satellite une poussée adaptée pour augmenter l'altitude de son périgée et abaisser celle de son apogée.

7. Procédé selon l'une des revendications 2 à 6 dans lequel, au cours de ladite étape c), l'on applique audit satellite une poussée adaptée pour diminuer progressivement l'inclinaison de son orbite par rapport audit plan équatorial.

8. Procédé selon l'une des revendications 2 à 7 dans lequel, au cours de ladite sous-étape c', ledit satellite se déplace sur une orbite géosynchrone présentant une inclinaison d'au moins 5° par rapport audit plan équatorial.

9. Procédé selon l'une des revendications 2 à 8 comprenant également l'étape suivante :
d) positionner ledit satellite sur ladite orbite géostationnaire.

10. Procédé selon l'une des revendications précédentes, dans lequel ledit satellite est un satellite de télécommunications à propulsion tout électrique ou à propulsion hybride chimique - électrique.

## Patentansprüche

1. Verfahren zum Positionieren eines Satelliten (SAT), welches einen Transferschritt beinhaltet, in dessen Verlauf der Satellit sich auf einer geosynchronen, elliptischen Umlaufbahn (GSO1, GSO2) bewegt, wobei die Umlaufbahn progressiv durch Aufbringen eines Schubes (P) mit Hilfe eines elektrischen oder hybriden, elektrisch-chemischen Antriebs verformt wird, um sie einer geostationären Umlaufbahn (GEO) anzunähern, **dadurch gekennzeichnet, dass** der Transferschritt einen Unterschritt beinhaltet, in dessen Verlauf, im Zuge einer Vielzahl von Umrundungen des Satelliten, der Schub während eines Bruchteils der Umlaufperiode gestoppt wird, und Tests in Abwesenheit eines Schubs bewerkstelligt werden, **dadurch gekennzeichnet, dass** die Tests Tests einer Telekommunikations-Nutzlast sind.

2. Verfahren nach Anspruch 1, welches folgende Schritte beinhaltet:
a) mit Hilfe einer Trägerrakete, Bringen des Satelliten auf eine sub-geosynchrone, elliptische und zur Äquatorialebene (EQ) geneigte Transferumlaufbahn (GTO);
b) Bringen des Satelliten auf die geosynchrone, elliptische Umlaufbahn (GSO1), welche in Bezug auf die Äquatorialebene geneigt ist; und
c) durch elektrischen oder hybriden, elektrisch-chemischen Antrieb, Aufbringen eines Schubes (P) auf den Satelliten, der geeignet ist, die elliptische, geneigte, geosynchrone Umlaufbahn progressiv einer geostationären Umlaufbahn anzunähern (GEO);
wobei der Schritt c) den Unterschritt
c') beinhaltet, in dessen Verlauf, im Zuge einer Vielzahl von Umrundungen des Satelliten, der Schub während eines Bruchteils der Umlaufperiode gestoppt wird und die Tests einer Telekommunikations-Nutzlast des Satelliten in Abwesenheit eines Schubs bewerkstelligt werden.

3. Verfahren nach Anspruch 2, bei welchem die Transferumlaufbahn eine geostationäre Transferumlaufbahn ist.

4. Verfahren nach einem der Ansprüche 2 oder 3, bei welchem der Schritt b) das Aufbringen eines Schubes beinhaltet, welcher geeignet ist, die Höhe des Apogäums und des Perigäums der Umlaufbahn des Satelliten zu erhöhen.

5. Verfahren nach einem der Ansprüche 2 bis 4, bei welchem die geosynchrone Umlaufbahn elliptisch ist, wobei ihre Hauptachse in der Äquatorialebene liegt und bei welchem im Zuge des Unterschrittes c' die Nutzlast-Tests in Bruchteilen der Umlaufperiode bewerkstelligt werden, in deren Verlauf der Satellit sich am weitesten von der Äquatorialebene entfernt befindet.

6. Verfahren nach einem der Ansprüche 2 bis 5, bei welchem man im Zuge des Schrittes c) einen Schub auf den Satelliten aufbringt, der geeignet ist, die Höhe seines Perigäums zu erhöhen und diejenige seines Apogäums zu senken.

7. Verfahren nach einem der Ansprüche 2 bis 6, bei welchem man im Zuge des Schrittes c) einen Schub auf den Satelliten aufbringt, der geeignet ist, die Neigung seiner Umlaufbahn zur Äquatorialebene progressiv zu verringern.

8. Verfahren nach einem der Ansprüche 2 bis 7 bei welchem sich der Satellit im Zuge des Unterschrittes c' auf einer geosynchronen Umlaufbahn bewegt, welche eine Neigung von mindestens 5° zur Äquatorialebene aufweist.

9. Verfahren nach einem der Ansprüche 2 bis 8, welches zudem folgenden Schritt beinhaltet:
d) Positionieren des Satelliten auf der geostationären Umlaufbahn.

10. Verfahren nach einem der vorhergehenden Ansprüche, bei welchem der Satellit ein Telekommunikations-Satellit mit vollelektrischem Antrieb oder mit hybridem chemisch-elektrischem Antrieb ist.

## Claims

1. A method for stationing a satellite (SAT) comprising a transfer step, during which said satellite moves on a geosynchronous elliptical orbit (GSO1, GSO2), said orbit being progressively deformed by applying a thrust (P) by means of electric or hybrid electric-chemical propulsion in order to bring it to a geostationary orbit (GEO), **characterised in that** said transfer step comprises a sub-step, during which, during a plurality of revolutions of the satellite, said thrust is stopped for a fraction of an orbital period and tests are performed in the absence of thrust, **characterised in that** said tests are tests of a telecommunication payload.

2. The method as claimed in claim 1, comprising the following steps:
a) injecting, using a launcher, said satellite into a sub-geosynchronous transfer orbit (GTO) that is elliptical and is inclined relative to an equatorial plane (EQ);
b) bringing said satellite into said geosynchronous elliptical orbit (GSO1) that is inclined relative to said equatorial plane; and
c) applying, through electric or hybrid electric-chemical propulsion, a thrust (P) to said satellite that is adapted for progressively bringing said inclined geosynchronous elliptical orbit to a geostationary orbit (GEO);
wherein said step c) comprises a sub-step
c'), during which, during a plurality of revolutions of the satellite, said thrust is stopped for a fraction of an orbital period and said tests of a telecommunication payload of said satellite are performed in the absence of thrust.

3. The method as claimed in claim 2, wherein said transfer orbit is a geostationary transfer orbit.

4. The method as claimed in any one of claims 2 or 3, wherein said step b) comprises applying a thrust adapted for increasing the altitude of the apogee and of the perigee of the orbit of said satellite.

5. The method as claimed in any one of claims 2 to 4, wherein said geosynchronous orbit is elliptical, with its largest axis on said equatorial plane, and wherein, during said sub-step c'), said payload tests are performed over fractions of an orbital period, during which the satellite is furthest away from the equatorial plane.

6. The method as claimed in any one of claims 2 to 5, wherein, during said step c), a thrust is applied to said satellite that is adapted for increasing the altitude of its perigee and for decreasing the altitude of its apogee.

7. The method as claimed in any one of claims 2 to 6, wherein, during said step c), a thrust is applied to said satellite that is adapted for progressively reducing the incline of its orbit relative to said equatorial plane.

8. The method as claimed in any one of claims 2 to 7, wherein, during said sub-step c'), said satellite moves on a geosynchronous orbit having an incline of at least 5° relative to said equatorial plane.

9. The method as claimed in any one of claims 2 to 8, further comprising the following step:
d) positioning said satellite on said geostationary orbit.

10. The method as claimed in any one of the preceding claims, wherein said satellite is a telecommunications satellite with fully electric propulsion or with hybrid electric-chemical propulsion.
